# EUROPÄISCHE PATENTSCHRIFT

(11) **EP 0 985 439 B1**
(45) Veröffentlichungstag und Bekanntmachung des Hinweises auf die Patenterteilung: **05.02.2003**
(21) Anmeldenummer: 99113375.2
(22) Anmeldetag: 10.07.1999
(51) Int. Cl.: B01D 46/26, F01P 11/12

(54) **Reinigungsvorrichtung für ein rotierendes Kühlluftfilter**
Cleaning device for a rotary cooling air filter
Dispositif de nettoyage pour un filtre rotatif d'air de refroidissement

(30) Priorität: 13.08.1998 DE 19836696
(43) Veröffentlichungstag der Anmeldung: 15.03.2000
(73) Patentinhaber: Case Harvesting Systems GmbH, 01844 Neustadt (DE)
(72) Erfinder: Radke, Karl-Heinz, Dipl.-Ing., 02681 Wilthen (DE)
(74) Vertreter: Müller, Lutz

(56) Entgegenhaltungen:
- EP-A- 0 489 975
- DE-A- 4 404 401
- US-A- 4 233 040

## Beschreibung

Die Erfindung betrifft eine Reinigungsvorrichtung für ein rotierendes Kühlluftfilter für einen wasser- oder luftgekühlten Antriebsmotor einschließlich weiterer Kühlereinheiten selbstfahrender Landmaschinen, insbesondere für Feldhäcksler, Mähdrescher oder Schwadmäher, mit den Merkmalen nach dem Oberbegriff von Patentanspruch 1.

Derartige Reinigungsvorrichtungen für rotierende Kühlluftfilter sind durch die schwierigen Einsatzbedingungen der selbstfahrenden Landmaschinen notwendig geworden, da durch den bestimmungsgemäßen Einsatz umherfliegende Erntegutteile und Schmutzpartikel der Regelfall sind. Deshalb ist auch bereits eine Vielzahl verschiedener Ausführungsvarianten von Reinigungsvorrichtungen in der Praxis bekannt geworden, die die unerwünschten Partikel kontinuierlich vom rotierenden Kühlluftfilter zur Beibehaltung der maximalen Kühlleistung entfernen sollen. Nur dadurch ist eine ununterbrochene Arbeit der selbstfahrenden Erntemaschine auch unter komplizierten Einsatzbedingungen zu sichern.

So ist beispielsweise in der EP 0 269 765 B1 eine Reinigungsvorrichtung beschrieben, die ein Druckrohr aufweist, dessen rückwärtiges Ende sich im Luftstrom hinter dem Ventilator und vor dem Kühler befindet, so daß in ihm dadurch ein ständiger Überdruck anliegt. Unmittelbar hinter seinem Ende ist das Druckrohr um 180° umgebogen und erstreckt sich mit seinem oben offenen Teil entlang der äußeren Mantelfläche des rotierenden Kühlluftfilters. In einer anderen Ausführungsform liegt das Druckrohr mit seinem offenen Teil in einem geringen Abstand vor der äußeren Stirnfläche des rotierenden Kühlluftfilters. In beiden Fällen soll der so kanalisierte Luftstrom des Druckrohres die Fremdpartikel aus den Löchern des rotierenden Kühlluftfilters wegblasen, was natürlich nur für leichte und schwebende Teile gelingen kann. Da der Luftstrom lediglich entlang genannter Oberflächenbereiche geführt ist, kann er außen am Kühlluftfilter festgeklebte bzw. in den Öffnungen des Lochbleches des Kühlluftfilters verhakte Partikel nicht entfernen. Außerdem ist die Wirkung des Luftstromes stark eingeschränkt, da das die Luft aufnehmende Ende des Druckrohrs eine viel zu kleine Fläche aufweist und die sich daran anschließende Umlenkung dem Luftstrom einen sehr hohen statischen Gegendruck entgegenstellt.
Eine weitere Ausführungsvariante einer Reinigungsvorrichtung ist mit der DE 195 46 321 A1 bekannt geworden, bei der das rotierende Kühlluftfilter auf einem feststehenden und einseitig geschlossenem Rohr gelagert ist. An dessen offenes Ende schließt sich ein Druckrohr an, das wiederum ebenfalls mit seinem umgebogenen Ende entweder im Luftstrom hinter dem Kühler oder dem Ventilator liegt. Im Bereich innerhalb des Kühlluftfilters ist das zur Lagerung dienende Rohr an der unteren Seite mit einer Öffnung versehen, an die ein nach unten gerichteter Austrittskanal angeschlossen ist, der bis nahe an die Mantelfläche und einen Teil der Stirnfläche des rotierenden Kühlluftfilters heranreicht. Unterhalb des Austrittskanals ist ein Abscheidekanal zur Abführung der entfernten Erntegutteile und Schmutzpartikel angeordnet. Nachteilig an dieser Lösung ist auch hier die stark eingeschränkte Wirkung des Luftstromes, da die Fläche des umgebogenen Endes des Druckrohres zu klein ist und der durch die nachfolgende Umbiegung verursachte statische Gegendruck keine ausreichende Luftströmung zustande kommen läßt. Obwohl ein Ausblasen des Kühlluftfilters grundsätzlich günstiger als ein oberflächliches Wegblasen wie bei der Reinigungsvorrichtung nach der EP 0 269 765 B1 ist, ist die hier beschriebene Reinigungsvorrichtung viel zu leistungsschwach.

Eine prinzipiell gleiche Bauart einer anderen Reinigungsvorrichtung für das rotierende Kühlluftfilter ist mit der DE 40 33 204 A1 und der DE 195 47 348 C2 bekannt geworden. Sie unterscheiden sich lediglich in der technischen Ausführung des zur Anwendung kommenden Sauggebläses. Dort ist von außen auf die Stirn- und die Mantelfläche des Kühlluftfilters ein Gehäuse aufgesetzt, das an der dem Kühlluftfilter zugewandten Seite zumindest teilweise offen ist. Die von ihm bedeckte Fläche des Kühlluftfilters ist im Vergleich zu dessen gesamter Ansaugfläche gering. Dieses Gehäuse steht mit einem Unterdruck erzeugenden Sauggebläse über eine flexible Rohrleitung in Verbindung, das die Schmutzpartikel und die Erntegutrückstände von der Oberfläche des Kühlluftfilters absaugt und über einen Abscheidekanal ins Freie leitet. Innerhalb des Kühlluftfilters und gegenüberliegend vom Gehäuse ist ein Abschirmelement in Form einer ebenen Platte vorgesehen, die an dieser Stelle ein Durchströmen der Kühlluft verhindern soll, weil das den Absaugvorgang negativ beeinflußt. In der Praxis hat sich jedoch gezeigt, daß diese Reinigungsvorrichtung auch noch nicht in der Lage ist, am Umfang des Kühlluftfilters klebende bzw. in den Öffnungen des Lochbleches verhakte Partikel weitestgehend zu entfernen.

Schließlich ist noch mit der DE-OS 44 04 401 A1 eine weitere Reinigungsvorrichtung bekannt geworden, die die nach der DE 40 33 204 A1 in der Ausbildung des Abschirmelementes verbessern soll. Dazu ist das Abschirmelement als ein inneres Gehäuse ausgebildet, dessen der Stirnfläche des Kühlluftfilters zugewandte Fläche offen ist. Die so gebildete Öffnung des inneren Gehäuses ist deutlich größer als die des äußeren Gehäuses, das mit dem Sauggebläse verbunden ist. An dieser Lösung ist zu bemängeln, daß es sich bei der Luftansaugung neben dem äußeren Gehäuse keinesfalls um eine Zusatzluftmenge handelt, da die angesaugte Luftmenge ausschließlich von der Leistung des Sauggebläses bestimmt wird. Durch diese Luftleitung wird nur negativ bewirkt, daß sich die Erntegutrückstände und die Schmutzpartikel noch mehr am Kühlluftfilter festsetzen. Weiterhin ist von Nachteil, daß durch die vom inneren Gehäuse vergrößerte abgedeckte Fläche die Kühlluftgeschwindigkeit in den übrigen Bereichen erhöht wird, wodurch die unerwünschten Partikel noch fester am Kühlluftfilter hängen. Unter diesen Umständen kann diese Reinigungsvorrichtung das Kühlluftfilter nur unzureichend säubern.

Deshalb liegt der Erfindung die Aufgabe zugrunde, eine Reinigungsvorrichtung für ein rotierendes Kühlluftfilter für einen wasser- oder luftgekühlten Antriebsmotor einschließlich weiterer Kühlereinheiten selbstfahrender Landmaschinen zu schaffen, die auch am Kühlluftfilter anklebende oder in den Öffnungen seines Lochbleches verhakte Erntegutteile und Schmutzpartikel mit hoher Sicherheit entfernt und damit die Einsatzzeit der Erntemaschine auch unter komplizierten Einsatzbedingungen erhöht.
Diese Aufgabe wird durch den Gegenstand des Patentanspruches 1 gelöst, wobei in den darauf sich beziehenden Unteransprüchen Merkmale aufgeführt sind, die diese Lösung in vorteilhafter Weise weiterentwickeln und auf die hier deshalb ausdrücklich verwiesen wird.
Durch die Anordnung eines rotierenden Kühlluftfilters vor dem Kühler eines wassergekühlten Antriebsmotors oder direkt in der Nähe eines luftgekühlten Antriebsmotors saugt der dahinter angebrachte Ventilator die für den Wasserkühler des Motors bzw. die zur Kühlung des luftgekühlten Antriebsmotors notwendige Kühlluft durch seine Lufteintrittsöffnungen hindurch an. Neben dem erwähnten Wasserkühler können sich im Kühlluftstrom natürlich noch weitere Kühlereinheiten befinden, wofür bei großen selbstfahrenden Landmaschinen beispielsweise Hydrauliköl-, Getriebeöl- und Klimakühler denkbar wären, wodurch natürlich der Rahmen der Erfindung nicht verlassen wird.
Durch die komplizierten Einsatzbedingungen bei selbstfahrenden Landmaschinen infolge umherfliegender Erntegutteile und Schmutzpartikel setzen sich die Lufteintrittsöffnungen im rotierenden Kühlluftfilter schnell zu. Deshalb ist der Luftansaugseite der Stirn- und/oder der Mantelfläche ein äußeres Gehäuse zugeordnet, das in den an genannte Flächen angrenzenden Bereichen offen ist Da dieses äußere Gehäuse noch mit einen Sauggebläse verbunden ist, saugen dessen relativ kleine Wirksaugflächen im offenen Bereich umherfliegende Erntegutteile und Schmutzpartikel mit hoher Luftgeschwindigkeit von der Stirn- und/oder der Mantelfläche des vorbei rotierenden Kühlluftfilters ab, die dann das Sauggebläse passieren und durch den sich an das Sauggebläse anschließenden Kanal ins Freie gelangen. Durch die Anordnung von rotierenden Bürsten innerhalb des rotierenden Kühlluftfilters im Bereich der Wirksaugflächen des offenen Gehäuses durchstoßen deren Borsten die Lufteintrittsöffnungen von innen und bringen damit in den Lufteintrittsöffnungen verhakte oder festgeklebte Erntegutteile und Schmutzpartikel in den Wirkungsbereich der Absaugluft des offenen Gehäuses. Vorsorglich wird darauf verwiesen, daß die Anordnung von Bürsten innerhalb der Mantelfläche und der Stirnfläche den größten Reinigungseffekt bringt, daß aber auch die Verwendung nur einer Bürste entweder innerhalb der Mantelfläche oder der Stirnfläche ebenso zur Erfindung gehört. Analog verhält es sich, wenn zum Durchstoßen der Lufteintrittsöffnungen an der Mantelfläche und/oder der Stirnfläche mehr als eine Bürste eingesetzt wird.

In einer bevorzugten Ausführung sind die Bürsten frei drehbar im feststehenden Bürstengehäuse gelagert, wodurch sie mit der gleichen Umfangsgeschwindigkeit rotieren wie die sie berührende Stirn- und Mantelfläche des rotorierenden Kühlluftfilters. Damit das so über die gesamte Länge der Bürsten bleibt, ist die die Stirnfläche berührende Bürste in der Form als Kegelstumpfbürste und die die Mantelfläche berührende Bürste als Zylinderbürste ausgebildet.
In einer anderen zweckmäßigen Ausführungsvariante können die Bürsten auch angetrieben sein, wobei nur darauf zu achten ist, daß ihre Umfangsgeschwindigkeiten mit denen der an ihnen vorbeirotierenden Flächen des rotierenden Kühlluftfilters am besten gleich bzw. annähernd gleich groß sein sollten. Den Bürsten wird die Rotation dadurch ermöglicht, indem sie beidseitig von Lagerbolzen aufgenommen sind, auf denen Lager sitzen. Die Lagerbolzen wiederum sind Bestandteil von Winkel- oder Schwenkhebeln, die um einen Drehpunkt im Bürstengehäuse verschwenkbar angebracht sind. Dadurch kann jede Seite der Bürsten für sich zur Stirn- und/oder der Mantelfläche des rotierenden Kühlluftfilters hin oder von diesen weggeschwenkt werden. Damit die Borsten der Bürsten auch die Lufteintrittsöffnungen des rotierenden Kühlluftfilters auf einer bestimmten Fläche durchstoßen, ziehen relativ lange Zugfedern an den den Lagerbolzen gegenüberliegenden Enden der Winkel- bzw. Schwenkhebel mit annähernd gleich großer Zugkraft über einen relativ großen Schwenkbereich. Letzteres ist besonders wichtig, wenn die Borsten durch Verschleiß nach einer bestimmten Zeit kürzer werden.
Zweckmäßig für eine optimale Absaugfunktion durch das äußere Gehäuse ist noch, daß das Bürstengehäuse dessen Wirksaugflächen von innen weitestgehend abschirmt, so daß keine zuströmende Kühlluft den entgegengesetzt gerichteten Absaugluftstrom stören kann. Dazu reicht das nur je eine Öffnung für die Zylinderbürste und für die Kegelstumpfbürste freilassende Bürstengehäuse auch ganz nahe bis an die Stirn- und Mantelfläche des rotierenden Kühlluftfilters heran. Damit ergeben sich für diese erfindungsgemäße Reinigungsvorrichtung die Vorteile, daß nicht nur im Bereich des rotierenden Kühlluftfilters herumschwebende oder nur leicht an dessen Oberfläche anhaftende Erntegutteile und Schmutzpartikel entfernt werden können, sondern auch in dessen Lufteintrittsöfihungen verhakte oder festgeklebte Partikel. Dadurch entfallen manuelle Reinigungsarbeiten völlig, wodurch die Einsatzzeit der selbstfahrenden Landmaschinen gerade unter komplizierten Einsatzbedingungen wesentlich erhöht werden kann.

Die Erfindung soll nun anhand eines Ausführungsbeispieles näher erläutert werden, wobei die einzelnen Figuren zeigen:
- Fig. 1:: eine Seitenansicht auf einen selbstfahrenden Feldhäcksler mit einem rotierenden Kühlluftfilter und einer Reinigungsvorrichtung auf der in Fahrtrichtung gesehenen rechten Seite,

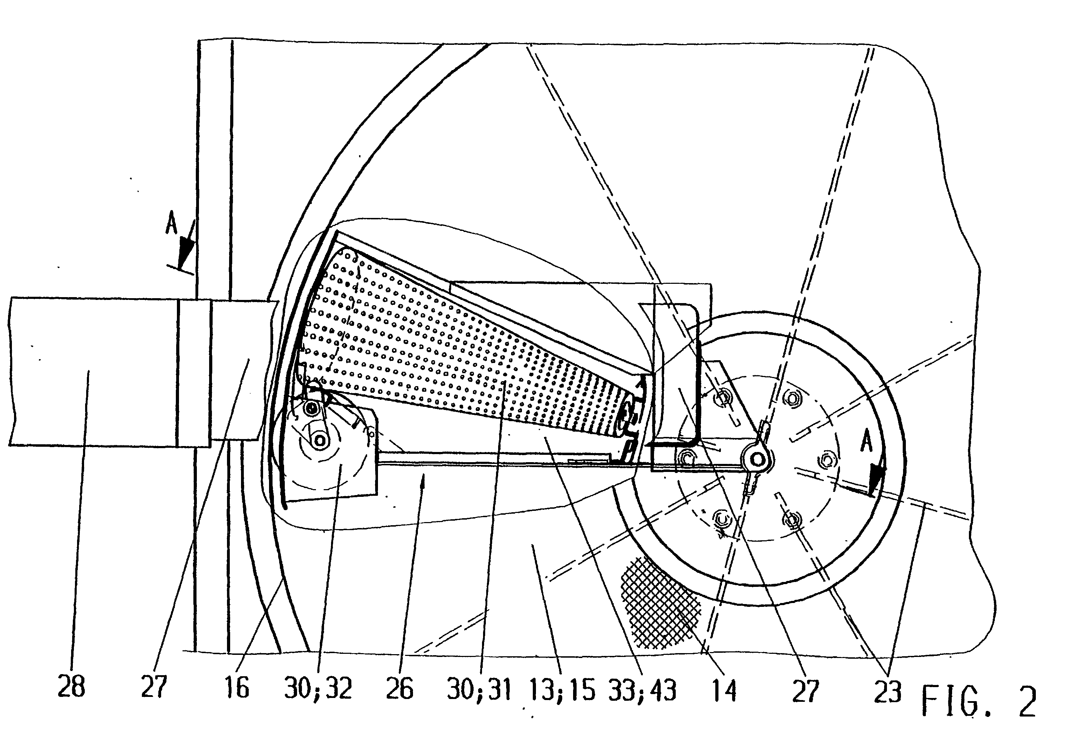

- Fig. 2:: eine vergrößerte Darstellung der Reinigungsvorrichtung nach Fig. 1 mit teilweise weggebrochenem äußeren Gehäuse,
- Fig. 3:: einen Schnitt A-A nach Fig. 2,
- Fig. 4:: einen Schnitt B-B nach Fig. 3
- Fig. 5:: einen Schnitt C-C nach Fig. 3

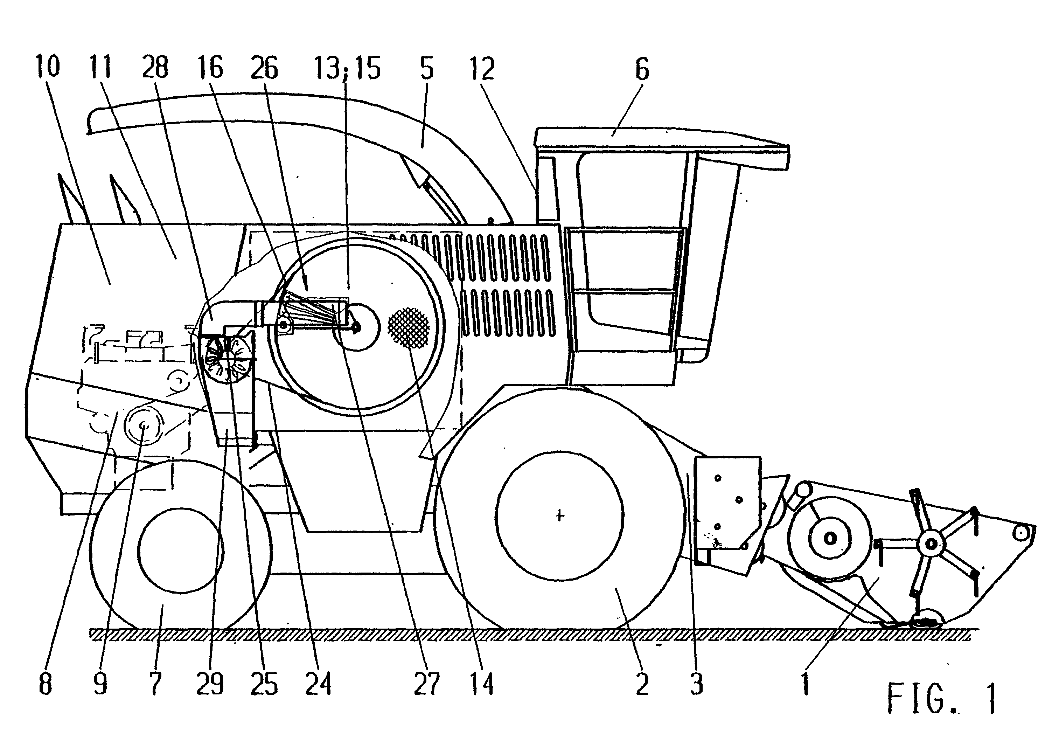

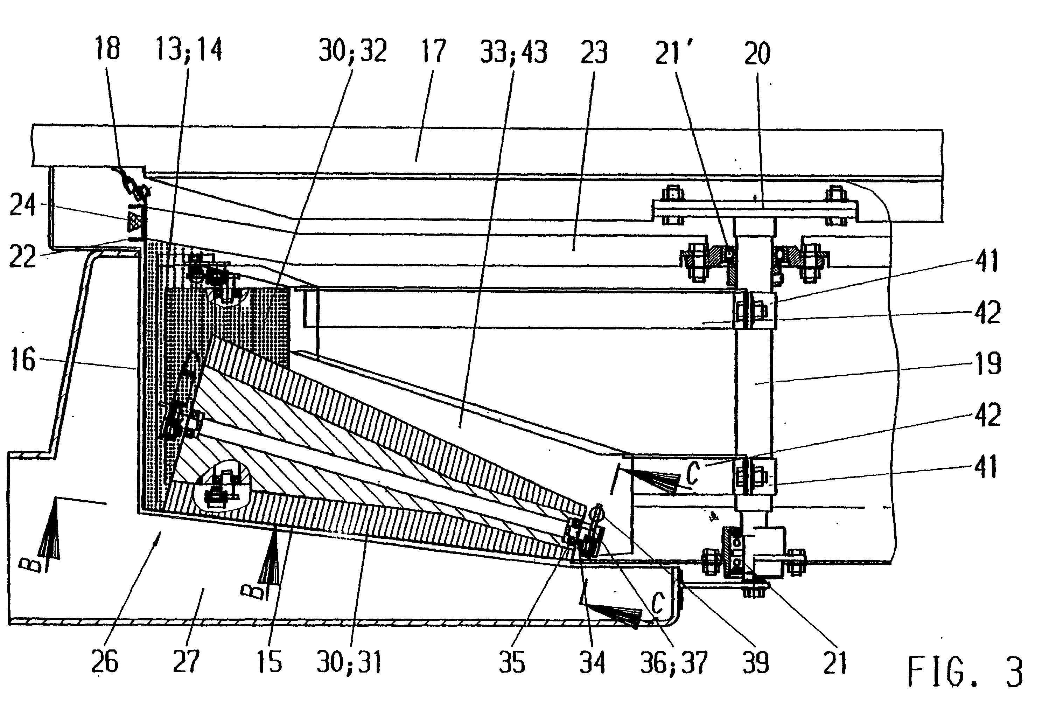

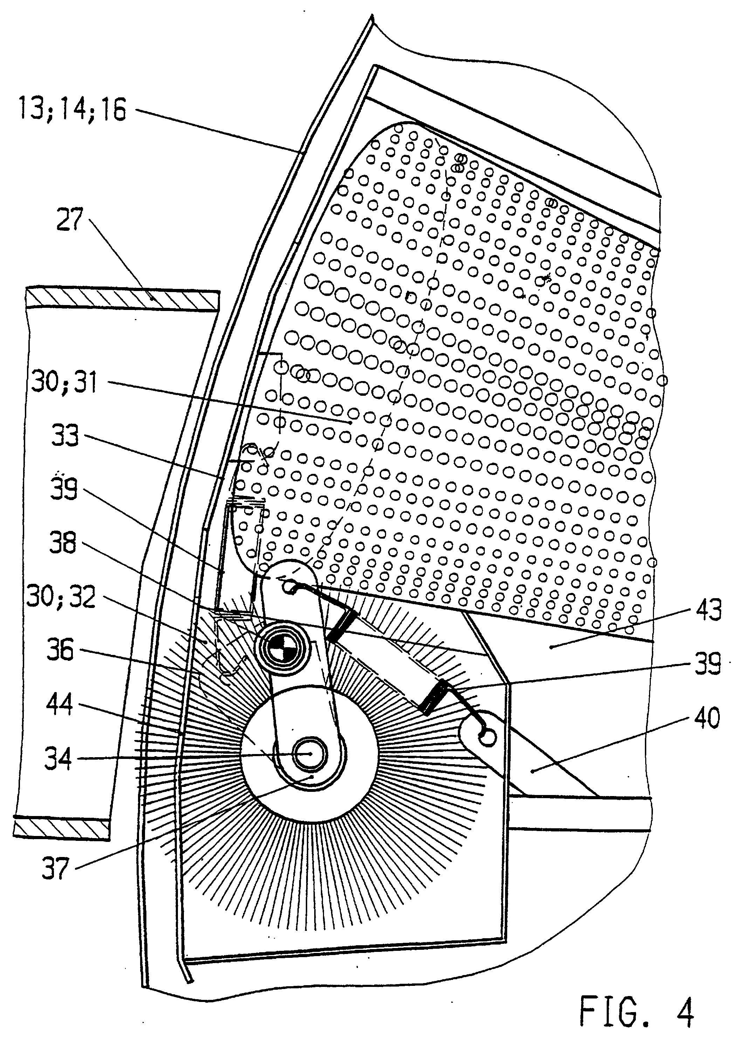

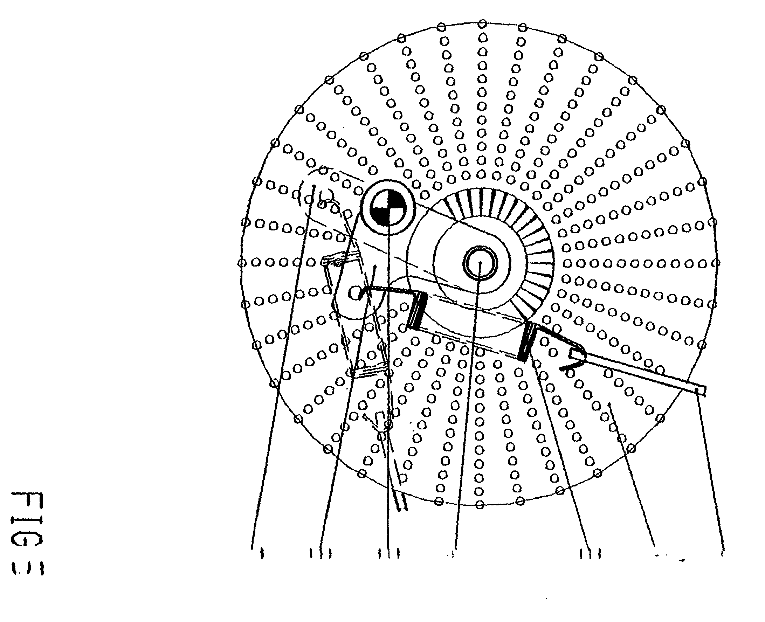

Die Figur 1 zeigt einen selbstfahrenden Feldhäcksler im Grundaufbau, der einen frontangebauten Adapter 1 besitzt, an den sich ein im Bereich der Vorderräder 2 angeordnetes Häckselaggregat 3 anschließt. Dem Häckselaggregat 3 ist ein Auswurfschacht 4 nachgeordnet, auf dessen oberem Ende ein Auswurfbogen 5 verschwenkbar gelagert ist. Oberhalb vom Häckselaggregat 3 und vor dem Auswurfschacht 4 befindet sich die Fahrerkabine 6. Zwischen seinen Hinterrädern 7 ist ein Antriebsmotor 8 mit einer quer zur Fahrtrichtung ausgerichteten Abtriebswelle 9 vorgesehen, die beidseitig mit Abtriebsmöglichkeiten zum Antrieb der Arbeitsorgane, des Adapters 1 und des Fahrantriebes aus gestattet ist. Die den Motorraum 10 von hinten, oben, links- und rechtsseitig umhüllende Verkleidung 11 erstreckt sich nach vorn bis in den Bereich der Rückwand 12 der Fahrerkabine 6.
An der in Fahrtrichtung gesehenen rechten Seite der Verkleidung 11 ist ein als Zuluftöffnung dienendes rotierendes Kühlluftfilter 13 angebracht, durch dessen Lufteintrittsöffnungen 14 in der Stirnfläche 15 und der Mantelfläche 16 die Kühlluft in ein Kühlergehäuse 17 gelangt. Im Kühlergehäuse 17 befinden sich der nicht dargestellte Kühler für den Antriebsmotor 8 sowie ein Hydrauliköl-, Klima- und Getriebeölkühler und dahinter der die Kühlluft ansaugende Ventilator. Die Abdichtung gegen Erntegutteile und Schmutzpartikel zwischen dem rotierenden Kühlluftfilter 13 und dem Kühlergehäuse 17 übernimmt eine am äußeren Umfang des rotierenden Kühlluftfilter 13 befestigte kreisringförmige Abdichtbürste 18, wie das in Figur 3 dargestellt ist. An gleicher Stelle ist die konstruktive Ausbildung des rotierenden Kühlluftfilters 13 zu sehen. Dazu ist konzentrisch und gleichgerichtet mit der Rotationsachse des Ventilators ein Aufnahmedorn 19 vorgesehen, der mit einer Flanschverbindung 20 am Kühlergehäuse 17 angebracht ist. Eine auf dem Aufnahmedorn 19 angeordnete Lagerung 21 ist direkt mit der Stirnfläche 15 und eine weitere Lagerung 21' mit der als Riemenführung 22 ausgebildeten Mantelfläche 16 des rotierenden Kühlluftfilters 13 über strahlenförmig von ihr ausgehende Rippen 23 verbunden. Die Rotationsbewegung des rotierenden Kühlluftfilters13 wird durch einen in der Riemenführung 22 liegenden Riemen 24 erzeugt, der zweckmäßigerweise von der Antriebswelle eines Sauggebläses 25 angetrieben wird, auf das später näher eingegangen wird.
Die Reinigungsvorrichtung 26 besteht aus einem der Luftansaugseite der Stirnfläche 15 und der Mantelfläche 16 vorgeordneten äußeren Gehäuse 27, das in dem der Stirnfläche 15 und der Mantelfläche 16 gegenüberstehenden Bereich offen ist. Sein Ende führt über ein möglichst flexibles Verbindungsrohr 28 zu bereits vorstehend erwähntem Sauggebläse 25, an das sich ein annähernd vertikal zum Erdboden zeigender Abscheidekanal 29 anschließt.
Innerhalb des rotierenden Kühlluftfilters 13 befinden sich im Bereich der Wirksaugflächen des äußeren Gehäuses 27 rotierende Bürsten 30, die mit ihren Borsten die vielen kleinen Lufteintrittsöffnungen 14 durchdringen. Dabei ist die der Wirksaugfläche des äußeren Gehäuses 27 im Bereich der Stirnfläche 15 zugeordnete Bürste 30 der Form nach eine Kegelstumpfbürste 31 und die der Mantelfläche 16 zugeordnete eine Zylinderbürste 32.
Beide Bürsten 31;32 sind frei drehbar in einem Bürstengehäuse 33 gelagert. Alle in Figur 3 zu sehenden Lagerungen sind konstruktiv prinzipiell gleich ausgebildet, da jede Bürste 31;32 beidseitig in Lagerbolzen 34 und darauf sitzenden Lagern 35 aufgenommen ist. In den Figuren 4 und 5 ist dargestellt, daß die Lagerbolzen 34 einenends je nach den räumlichen Möglichkeiten entweder an Winkelhebeln 36 oder an geraden Schwenkhebeln 37 befestigt sind, die um Drehpunkte 38 verschwenkbar im Bürstengehäuse 33 aufgehangen sind und die anderenends mit vorgespannten Zugfedern 39 in Verbindung stehen. Das andere Ende der Zugfedern 39 hängt in am Bürstengehäuse 33 angebrachten Laschen 40. Das gesamte Bürstengehäuse 33 ist freitragend am Aufrahmedorn 19 befestigt. Dazu befinden sich zwischen den Lagerungen 21;21' verdrehsicher am Aufnahmedorn 19 angeschraubte Schellen 41, die mit am Bürstengehäuse 33 angeschweißten Aufnahmewinkeln 42 lösbar verbunden sind. Das weitestgehend geschlossen ausgebildete Bürstengehäuse 33 hat lediglich im Bereich der Stirnfläche 15 des rotierenden Kühlluftfilters 13 eine Öffnung 43 für die Kegelstumpfbürste 31 und im Bereich der Mantelfläche 16 des rotierenden Kühlluftfilters 13 eine Öffnung 44 für die Zylinderbürste 32.

## Patentansprüche

1. Reinigungsvorrichtung für ein rotierendes Kühlluftfilter (13) zum Entfernen der an seiner Stirn- und/oder Mantelfläche (15, 16) anhaftenden angesaugten Erntegutteile und Schmutzpartikel für einen wasser- oder luftgekühlten Antriebsmotor (8) und/oder weiterer Kühlereinheiten selbstfahrender Landmaschinen, die aus einem der Luftansaugseite der Stirn- und /oder Mantelfläche (15, 16) vorgeordneten äußeren Gehäuse (27) besteht, das mit einem Sauggebläse (25) verbunden ist, dessen der Stirn- und/oder Mantelfläche (15, 16) gegenüberstehender Bereich zumindest teilweise offen ist und dessen Wirksaugfläche deutlich kleiner als die gesamte Stirn- und Mantelfläche (15, 16) des rotierenden Kühlluftfilters (13) ist, **dadurch gekennzeichnet, daß** innerhalb des rotierenden Kühlluftfilters (13) im Bereich der Wirksaugfläche des äußeren Gehäuses (27) die Lufteintrittsöffnungen (14) im rotierenden Kühlluftfilter (13) durchdringende rotierende Bürsten (30) angeordnet sind.

2. Reinigungsvorrichtung nach Anspruch 1, **dadurch gekennzeichnet, daß** der Wirksaugfläche des äußeren Gehäuses (27) im Bereich der Stirnfläche (15) des rotierenden Kühlluftfilters (13) eine Kegelstumpfbürste (31) und im Bereich der Mantelfläche (16) des rotierenden Kühlluftfilters (13) eine Zylinderbürste (32) zugeordnet ist.

3. Reinigungsvorrichtung nach den Ansprüchen 1 und 2, **dadurch gekennzeichnet, daß** die Bürsten (30) frei drehbar in einem feststehenden Bürstengehäuse (33) gelagert sind.

4. Reinigungsvorrichtung nach den Ansprüchen 1 und 2, **dadurch gekennzeichnet, daß** die Bürsten (30) mit der gleichen Umfangsgeschwindigkeit wie die sich an ihnen vorbeibewegende Stirnfläche (15) bzw. Mantelfläche (16) des rotierenden Kühlluftfilters (13) angetrieben werden.

5. Reinigungsvorrichtung nach den Ansprüchen 1 bis 4, **dadurch gekennzeichnet, daß** die Bürsten (30) beidseitig in Lagerbolzen (34) und darauf sitzenden Lagern (35) aufgenommen sind, wobei die Lagerbolzen (34) einenends an Winkelhebeln (36) oder Schwenkhebeln (37) befestigt sind, die um Drehpunkte (38) im Bürstengehäuse (33) verschwenkbar aufgehangen sind und die anderenends mit vorgespannten Zugfedern (39) in Verbindung stehen.

6. Reinigungsvorrichtung nach den Ansprüchen 1 bis 5, dadurch gekennzeichnnet, daß das weitestgehend geschlossene Bürstengehäuse (33) im Bereich der Stirnfläche (15) des rotierenden Kühlluftfilters (13) mit seinem Umfang bis dicht an die Stirnfläche (15) und lediglich eine Öffnung (43) für die Kegelstumpfbürste (31) freilassend heranreicht.

7. Reinigungsvorrichtung nach den Ansprüchen 1 bis 6, **dadurch gekennzeichnet, daß** das weitestgehend geschlossene Bürstengehäuse (33) im Bereich der Mantelfläche (16) des rotierenden Kühlluftfilters (13) bis dicht an die Mantelfläche (16) und lediglich eine Öffnung (44) für die Zylinderbürste (32) freilassend heranreicht.

## Claims

1. A cleaning device for a rotating cooling air filter (13) for removing the particles of harvested crop and dirt adhering to or sucked into its face side and/or jacket surface (15,16) for a water-cooled or air-cooled driving engine (8) and/or further cooling units on self-propelled agricultural machines, which consists of an external casing (27) arranged on the air intake side of the front face and/or the jacket surface (15,16), which is connected with an extraction fan (25), on which the area opposite the front face and/or jacket surface (15,16) is at least partially open and the effective suction surface of which is markedly smaller than the total front face and jacket surface of the rotating cooling air filter (13), **characterised in that** within the rotating cooling air filter (13) in the region of the effective suction area of the external casing (27) cylindrical brushes (30) are arranged penetrating the air admittance openings (14) in the rotating cooling air filter (13).

2. A cleaning device in accordance with claim 1, **characterised in that**, to the effective suction surface of the external casing (27) in the region of the front face (15) of the rotating cooling air filter (13) a truncated cone brush (31) is assigned and in the region of the jacket surface (16) of the rotating cooling air filter (13) a cylindrical brush (32) is assigned.

3. A cleaning device in accordance with claims 1 and 2, **characterised in that**, the brushes (30) are carried freely rotatable in a fixed brush housing (33).

4. A cleaning device in accordance with claims 1 and 2, **characterised in that**, the brushes (30) are driven at the same peripheral speed as that at which the front face (15) or jacket surface (16) of the rotating cooling air filter (13) moves past them.

5. A cleaning device in accordance with claims 1 to 4, **characterised in that**, the brushes (30) are held on both sides on bearing pins (34) and bearings (35) seated on them, in which the bearing pins (34) are fixed at one end in angled levers (36) or pivoting levers (37), which are suspended so that they can swivel about pivots (38) in the brush housing (33) and are connected at the other end with prestressed tensioning springs (39).

6. A cleaning device in accordance with claims 1 to 5, **characterised in that**, the brush housing (33) enclosed to a maximum extent, in the region of the front face (15) of the rotating cooling air filter (13) reaches with its span just up to the front face (15) and has only one opening (43) for the truncated cone brush (31).

7. A cleaning device in accordance with claims 1 to 6, **characterised in that**, the brush housing (33) enclosed to a maximum extent, in the region of the jacket surface (16) of the rotating cooling air filter (13) reaches with its span just up to the jacket surface (16) and has only one opening (44) for the cylindrical brush (32).

## Revendications

1. Dispositif de nettoyage pour un filtre à air de refroidissement rotatif (13) pour l'élimination des éléments du produit de récolte et des particules de crasse aspirés et adhérant à sa surface d'extrémité et/ou latérale (15,16) pour un moteur d'entraînement refroidi par air ou par eau (8) et/ou d'autres unités de refroidissement de machines agricoles automotrices, qui consiste en un châssis extérieur (27) placé avant le côté d'extraction d'air de la surface d'extrémité et/ou latérale (15,16), châssis qui est relié à un ventilateur extracteur (25) dont la zone opposée à la surface d'extrémité et/ou latérale (15,16) est au moins ouverte partiellement et dont la surface d'extraction efficace est nettement plus petite que la surface d'extrémité et latérale (15,16) totale du filtre d'air de refroidissement rotatif (13), **caractérisé en ce que** à l'intérieur du filtre d'air de refroidissement rotatif (13) dans la zone de la surface d'extraction efficace du châssis extérieur (27), les ouvertures d'entrée d'air (14) sont disposées dans des brosses en rotation (30) pénétrant dans le filtre d'air de refroidissement rotatif (13).

2. Dispositif de nettoyage selon la revendication 1, **caractérisé en ce que** la surface d'extraction efficace du châssis extérieur (27) présente, dans la zone de la surface latérale (15) du filtre d'air de refroidissement rotatif (13) une brosse tronconique (31) et dans la zone de la surface latérale (16) du filtre d'air de refroidissement rotatif (13) une brosse cylindrique (32).

3. Dispositif de nettoyage selon les revendications 1 et 2, **caractérisé en ce que** les brosses (30) sont disposées de manière à tourner librement dans un châssis (de brosse) (33) fixe.

4. Dispositif de nettoyage selon les revendications 1 et 2, **caractérisé en ce que** les brosses (30) sont entraînées avec la même vitesse périphérique que la surface d'extrémité (15) ou la surface latérale (16) du filtre d'air de refroidissement rotatif se déplaçant devant elles.

5. Dispositif de nettoyage selon les revendications 1 à 4, **caractérisé en ce que** les brosses (30) sont incluses de part et d'autre dans des boulons de palier (34) et des paliers (35) reposant dessus, les boulons de palier (34) étant fixés, à une extrémité, à des leviers coudés (36) ou à des leviers pivotants (37) qui sont suspendus de manière à pivoter autour de points d'appui (38) dans le châssis (de brosse) (33) et reliés, à l'autre extrémité, avec des ressorts de traction prétendus (39).

6. Dispositif de nettoyage selon les revendications 1 à 5, **caractérisé en ce que** le châssis (de brosse) (33) fermé au maximum, dans la zone de la surface d'extrémité (15) du filtre d'air de refroidissement rotatif (13), arrive, avec son envergure, jusqu'à proximité immédiate de la surface d'extrémité (15) et laisse uniquement une ouverture (43) pour la brosse tronconique (31).

7. Dispositif de nettoyage selon les revendications 1 à 6, **caractérisé en ce que** le châssis (de brosse) (33) fermé au maximum dans la zone de la surface latérale (16) du filtre d'air de refroidissement rotatif (13) arrive, avec son envergure, jusqu'à proximité immédiate de la surface latérale (16) et laisse uniquement une ouverture (44) pour la brosse cylindrique (32).
